# FASCICULE DE BREVET EUROPEEN

(11) **EP 3 055 192 B1**
(45) Date de publication et mention de la délivrance du brevet: **08.11.2017**
(21) Numéro de dépôt: 14793208.1
(22) Date de dépôt: 12.09.2014
(51) Int. Cl.: B62D 25/14

(54) **DISPOSITIF DE FIXATION D'UNE TRAVERSE DE POSTE DE CONDUITE D'UN VEHICULE AUTOMOBILE**
VORRICHTUNG ZUR BEFESTIGUNG EINES QUERTRÄGERS EINER FAHRERKABINE EINES KRAFTFAHRZEUGS
DEVICE FOR ATTACHING A CROSS-MEMBER OF A DRIVER'S COMPARTMENT OF A MOTOR VEHICLE

(30) Priorité: 11.10.2013 FR 1359909
(43) Date de publication de la demande: 17.08.2016
(73) Titulaire: Renault S.A.S., 92100 Boulogne-Billancourt (FR)
(72) Inventeur: DELORD, Christian, F-93320 Pavillon sous Bois (FR); CAILLARD, Jerome, F-91190 Gif sur Yvette (FR); HLUBINA, Thierry, F-92372 Chaville (FR)
(86) Numéro de dépôt international: PCT/FR2014/052277
(87) Numéro de publication internationale: WO 2015/052391

(56) Documents cités:
- FR-A1- 2 951 688
- US-A1- 2010 032 228

## Description

### Domaine technique de l'invention

L'invention concerne le domaine du véhicule automobile.

L'invention a pour objet plus particulièrement un dispositif de fixation d'une extrémité de traverse de poste de conduite d'un véhicule automobile sur la caisse assemblée, ledit dispositif comprenant un élément de fixation muni d'une première face destinée à recevoir la traverse de poste de conduite et d'une deuxième face, opposée à la première face. Le document FR 2 951 688 A1 divulgue un tel dispositif de fixation.

### État de la technique

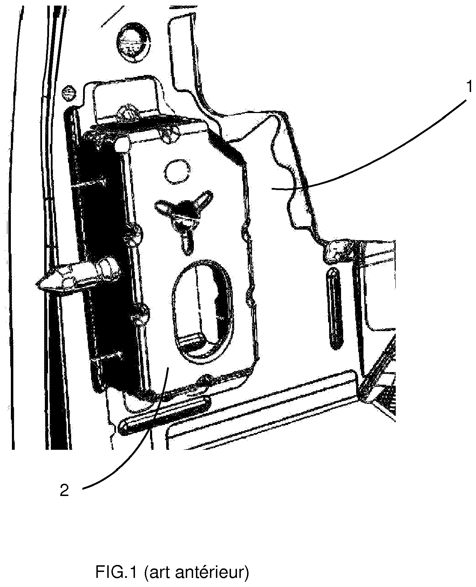

Dans le domaine des véhicules automobiles, il est connu une structure telle qu'illustrée à la figure 1 comprenant une doublure de pied avant 1 de véhicule sur laquelle il est fixé un dispositif de fixation 2 d'une traverse de poste de conduite (non représentée). Ce dispositif de fixation 2 adopte la forme d'un boitier venant former un corps creux ouvert ou fermé lorsqu'il est fixé à la doublure de pied avant 1. Ce type de conception implique une masse relativement importante. De plus, pour fixer une traverse de poste avant de conduite, il faut généralement deux dispositifs de fixations distincts en forme (un par côté), impliquant alors une gestion du référencement, des stocks conséquents en service après vente, etc.

Il résulte donc une problématique d'optimisation de la structure, notamment en terme de masse, tout en satisfaisant de préférence des critères adaptés de qualité, de coûts de fabrication, de délais de production et donc d'amélioration de la productivité.

Pour résoudre ces problématiques, il a été proposé d'intégrer le dispositif de fixation à la doublure de pied avant. Dans ce cas, le dispositif de fixation est formé par un emboutissage dans une zone particulière de la doublure de pied avant. Cependant, ce type de solution n'est pas possible à intégrer dans tous les types de véhicule.

### Objet de l'invention

Le but de la présente invention est de proposer une solution qui remédie à tout ou partie des inconvénients listés ci-dessus.

On tend vers ce but en ce que le dispositif comporte des premier et deuxième renforts s'étendant de la deuxième face et comprenant chacun : une embase reliée à l'élément de fixation et destinée à être fixée à une partie du véhicule, deux parois latérales s'étendant de l'embase et étant reliées à l'élément de fixation.

De préférence, les premier et deuxième renforts sont disposés au niveau d'extrémités longitudinales de l'élément de fixation.

Selon une réalisation, au moins l'une des parois latérales de chacun des premier et deuxième renforts est fixée à l'élément de fixation au niveau de la deuxième face, notamment par un cordon de soudure.

Par exemple, l'élément de fixation comporte deux ailettes s'étendant de la deuxième face, et une des parois latérales de chacun des premier et deuxième renforts est fixée à l'une correspondante desdites ailettes, notamment par un point de soudure.

Selon une mise en oeuvre, le dispositif comporte un premier organe de fixation de la traverse de poste de conduite à l'élément de fixation formé au niveau du premier renfort et un deuxième organe de fixation de la traverse de poste de conduite formé au niveau du deuxième renfort.

Selon un exemple particulier, la section de chacun des premier et deuxième renforts est définie, dans un plan perpendiculaire à la direction dans laquelle s'étendent lesdits premier et deuxième renforts, par une ligne ouverte de forme générale en U.

Avantageusement, le dispositif comporte un plan de symétrie perpendiculaire à l'élément de fixation et passant entre les premier et deuxième renforts.

Selon un mode préférentiel de réalisation, l'embase vient de matière avec l'élément de fixation par pliage, et en ce que les deux parois latérales viennent de matière avec l'embase par pliage.

L'invention est aussi relative à un agencement pour véhicule automobile comportant un dispositif de fixation tel que décrit, dont les premier et deuxième renforts s'étendent de l'élément de fixation vers l'avant du véhicule, une partie du véhicule sur laquelle est monté le dispositif de fixation, et une traverse de poste de conduite fixée sur le dispositif de fixation.

De préférence, la partie de véhicule comporte une doublure de pied avant, droit ou gauche, et au moins l'un des premier et deuxième renforts, notamment au niveau de son embase, est fixé, notamment par soudure, sur une face interne de ladite doublure de pied avant orientée vers l'intérieur du véhicule.

L'agencement peut aussi comporter un élément externe destiné à s'accoupler avec un élément de transmission d'effort du pied avant vers une porte avant du véhicule en cas de choc frontal au véhicule, ledit élément externe étant fixé, notamment par soudure, sur une face externe de ladite doublure de pied avant orientée vers l'extérieur du véhicule.

De préférence, l'élément externe comporte deux cloisons s'étendant de la face externe de la doublure de pied avant et disposées de sorte à permettre une transmission d'un effort transversal au véhicule entre la traverse de poste de conduite et ledit élément externe en cas de choc frontal au véhicule. Les deux cloisons peuvent être en alignement respectivement avec une des parois latérales dudit premier renfort et une des parois latérales dudit deuxième renfort.

En outre, la doublure de pied avant peut comporter une fente permettant le passage d'une aile de l'élément externe fixée, notamment par soudure, sur la première face du dispositif de fixation.

L'invention est aussi relative à un véhicule automobile comprenant un agencement tel que décrit.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un dispositif de fixation monté sur une doublure de pied avant selon l'art antérieur,
- la figure 2 est une vue en perspective d'un dispositif de fixation selon un mode d'exécution de l'invention,
- la figure 3 illustre le dispositif de fixation de la figure 2 monté sur une doublure de pied avant,
- la figure 4 illustre une vue de dessus d'un agencement selon un mode d'exécution de l'invention,
- la figure 5 illustre une vue en coupe selon A-A de la figure 4 centrée sur l'un des dispositifs de fixation.

### Description de modes préférentiels de l'invention

Pour les besoins de la présente description, il convient tout d'abord d'apporter quelques définitions.

Par définition, dans la présente description, l'axe X est un axe longitudinal du véhicule passant par l'avant et par l'arrière du véhicule. L'axe Y est quant à lui un axe transversal au véhicule et perpendiculaire à l'axe X. Le repère XY représente un plan horizontal du véhicule lorsqu'il repose sur ses roues sur un sol horizontal. L'axe Z est un axe perpendiculaire aux axes X et Y, et est un axe vertical au véhicule. Ces axes Y, X et Z sont repris aux différentes figures pour représenter un positionnement avantageux des différents éléments représentés au sein d'un véhicule automobile.

Par « traverse de poste de conduite », on entend généralement un élément allongé selon l'axe Y et assemblé de sorte à être monté au niveau de deux doublures de pied avant, respectivement gauche et droite, du véhicule automobile par l'intermédiaire de deux dispositifs de fixation. La traverse de poste de conduite est notamment destinée à recevoir ledit poste de conduite (tableau de bord, colonne de direction, boîte à gants). Elle est généralement parallèle à la traverse de baie disposée à l'interface avec le pare-brise avant du véhicule. En outre, elle rigidifie la zone de poste de conduite, et sert de point d'accroche à la colonne de direction, au volant, et aux dispositifs de sécurité passive notamment (par exemple les airbags).

Par « doublure de pied avant », on entend un élément structurel du véhicule sur lequel peuvent être montés une aile du véhicule, un montant de baie du pare-brise, fermant le corps creux à l'avant de l'entrée de porte avant.

Le dispositif de fixation décrit ci-après permet notamment de fixer une extrémité de la traverse de poste de conduite à une des doublures de pied avant et diffère notamment de ceux de l'art antérieur en ce qu'il comporte des renforts formés par deux cavités distinctes.

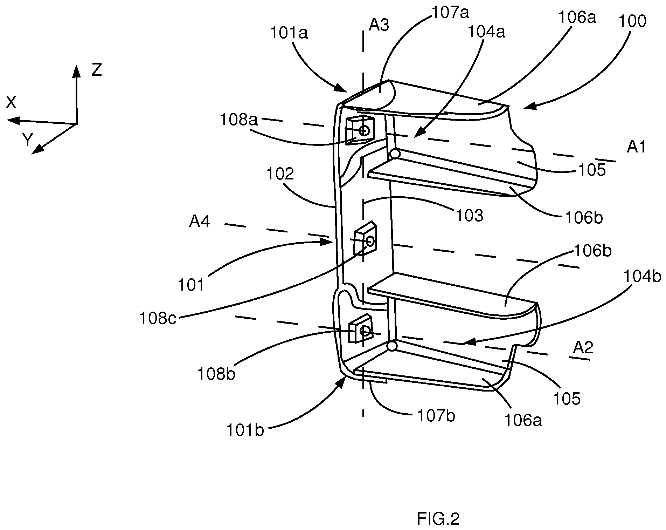

Sur la figure 2, le dispositif de fixation 100 d'une extrémité de traverse de poste de conduite d'un véhicule automobile sur la caisse assemblée comprend un élément de fixation 101 muni d'une première face 102 destinée à recevoir la traverse de poste de conduite ainsi qu'à servir de référence et de pilotage de la traverse de poste de conduite et d'une deuxième face 103, opposée à la première face 102. En outre, le dispositif de fixation comporte des premier et deuxième renforts 104a, 104b s'étendant de la deuxième face 103, notamment issus de la même pièce.

De préférence, ces premier et deuxième renforts 104a, 104b forment avec l'élément de fixation 101 deux cavités distinctes. Ces deux cavités s'étendent de manière perpendiculaire à la deuxième face 103 le long d'axes respectivement notés A1 et A2 à la figure 2 et servent d'étais à cette pièce.

L'utilisation d'un tel dispositif de fixation permet de fournir les mêmes fonctions que le dispositif de fixation de la figure 1 mais avec moins de matière, et de préférence en une unique pièce. La réduction de masse est évaluée entre 0,5 kg et 0,8 kg.

De préférence, les premier et deuxième renforts sont disposés au niveau d'extrémités longitudinales 101a, 101b de l'élément de fixation 101. Dès lors, on comprend que l'élément de fixation 101 est allongé selon l'axe A3, de préférence parallèle à l'axe Z (ou X selon une autre réalisation) lorsque le dispositif de fixation est assemblé dans un véhicule automobile permettant à la pièce d'être soudée sur elle-même.

Avantageusement, les premier et deuxième renforts 104a, 104b comprennent chacun une embase 105 reliée à l'élément de fixation 101 et destinée à être fixée à une partie du véhicule. Notamment, l'embase 105 vient de matière avec l'élément de fixation par pliage, autrement dit à partir d'une pièce initiale, un pliage de deux parties de la pièce par rapport à une autre partie de la pièce permet de positionner les deux embases. En outre, chacun des premier et deuxième renforts 104a, 104b comporte aussi deux parois latérales 106a, 106b s'étendant de l'embase 105, notamment venant de matière avec l'embase par pliage, et reliées à l'élément de fixation 101. Cette structure particulière, notamment les pliages de cette dernière, permet de conférer une grande résistance au dispositif de fixation.

Selon une première réalisation particulière, au moins l'une des parois latérales (ou les deux) 106a, 106b de chacun des premier et deuxième renforts 104a, 104b est fixée à l'élément de fixation 101 au niveau de la deuxième face 103, notamment par un cordon de soudure. De préférence, comme illustré à la figure 2, l'une des parois latérale 106b du premier renfort 104a et l'une des parois latérales 106b du deuxième renfort 104b, adjacente/proximale à ladite l'une des parois latérale 106b du premier renfort 104a, sont fixées à l'élément de fixation 101 au niveau de la deuxième face 103, notamment par un, ou plusieurs, cordon de soudure.

Selon une deuxième réalisation particulière combinable avec la première réalisation particulière, l'élément de fixation 101 comporte deux ailettes 107a, 107b s'étendant de la deuxième face 103, et au moins une des parois latérales de chacun des premier et deuxième renforts est fixée à l'une correspondante desdites ailettes 107a, 107b, notamment par un point de soudure. Notamment, les ailettes 107a, 107b viennent de matière avec le reste de l'élément de fixation 101 par pliage. Autrement dit, un pliage de l'élément de fixation 101, notamment au niveau de ses extrémités longitudinales 101a, 101b, permet de former lesdites ailettes 107a, 107b.

De préférence, la section de chacun des premier et deuxième renforts 104a, 104b est définie, dans un plan perpendiculaire à la direction dans laquelle s'étendent lesdits premier et deuxième renforts 104a, 104b, par une ligne ouverte de forme générale en U. Ceci permet d'augmenter le renforcement tout en limitant la masse du dispositif de fixation.

On a compris de ce qui a été dit ci-avant que l'extrémité de la traverse de poste de conduite va être fixée à l'élément de fixation. En ce sens, le dispositif de fixation 100 comporte un premier organe de fixation 108a de la traverse de poste de conduite à l'élément de fixation 101 formé au niveau du premier renfort 104a et un deuxième organe de fixation 108b de la traverse de poste de conduite formé au niveau du deuxième renfort 104b. De préférence, les parois latérales de chacun des renforts sont incluses respectivement dans des premier et deuxième plans parallèles entre eux et l'élément de fixation disposé au niveau du renfort correspondant est inclus dans un troisième plan parallèle aux premier et deuxième plans et disposé entre lesdits premier et deuxième plans.

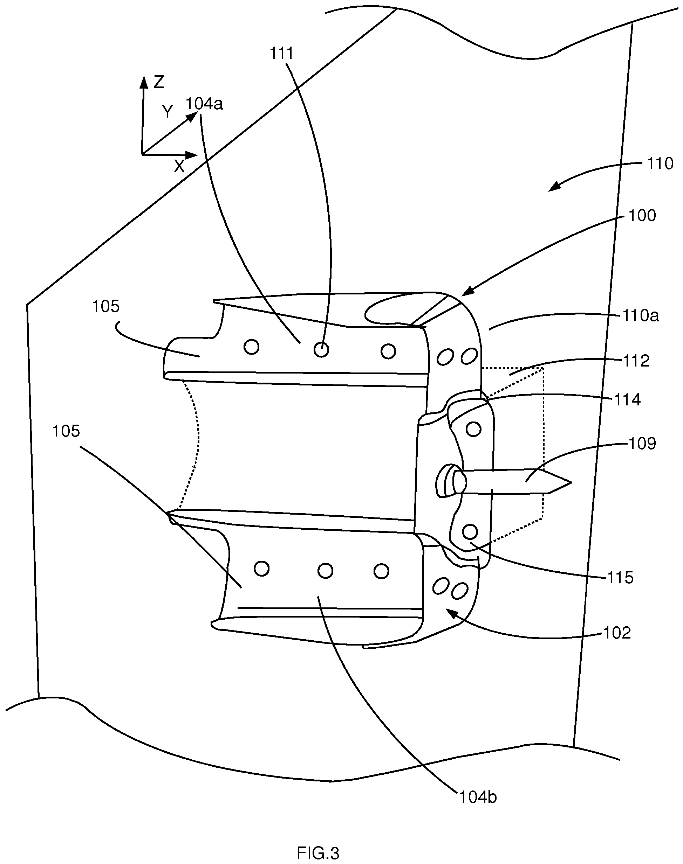

Par ailleurs, le dispositif de fixation 100 peut comporter un troisième organe de fixation 108c de la traverse de poste de conduite à l'élément de fixation 101 formé entre les premier et deuxième renforts 108a, 108b. Ce troisième organe de fixation 108c peut comporter un doigt de guidage 109 tel que visible à la figure 3 et destiné à traverser ou pénétrer une ouverture correspondante de la traverse de poste de conduite.

Avantageusement, le dispositif de fixation comporte un plan de symétrie perpendiculaire à l'élément de fixation 101, et passant entre les premier et deuxième renforts 104a, 104b. On comprend de la figure 2 que cet axe de symétrie inclut l'axe A4. Cette symétrie est avantageuse dans le sens où le dispositif de fixation peut dans ce cas aussi bien être utilisé pour une fixation à droite ou à gauche de la traverse de poste de conduite. Il en résulte une diminution des besoins en référencements de pièces distinctes. De plus, un même outil est alors capable de manipuler les dispositifs de fixation gauche ou droite sur une chaîne de production. Ainsi, les coûts de production et d'amortissement des outils de la chaîne de production sont diminués.

L'invention est aussi relative à un procédé de fabrication d'un dispositif de fixation tel que décrit. Un tel procédé peut comporter une étape de fourniture d'une plaque présentant des première, deuxième et troisième parties destinées à former respectivement les premier et deuxième renforts et l'élément de fixation par un pliage de la plaque. En particulier, le procédé peut comporter une étape de pliage de la première partie de la plaque et de la deuxième partie de la plaque par rapport à la troisième partie de la plaque de sorte qu'après pliage la troisième partie de la plaque forme l'élément de fixation à partir duquel les embases des premier et deuxième renforts s'étendent. Une autre étape de pliage des première et deuxième parties permet de délimiter les parois latérales de chacun des renforts. Le procédé peut aussi alors comporter une étape de soudure permettant de réaliser les différentes soudures évoquées ci-dessus, notamment une étape de soudure de chacune des parois latérales à la troisième partie formant l'élément de fixation.

L'invention est aussi relative à un agencement pour véhicule automobile tel qu'illustré à titre d'exemple aux figures 3 à 5. Un tel agencement comporte un dispositif de fixation 100 tel que décrit dont les premier et deuxième renforts 104a, 104b s'étendent de l'élément de fixation 101 vers l'avant du véhicule (c'est-à-dire selon l'axe X), la partie du véhicule 110 sur laquelle est monté le dispositif de fixation 100, une traverse de poste de conduite 113 fixée sur le dispositif de fixation 100.

De préférence, la partie de véhicule 110 comporte une doublure de pied avant, droit ou gauche, et au moins l'un des premier et deuxième renforts 104a, 104b, notamment au niveau de son embase 105, est fixé, notamment par soudure (en particulier par des points de soudure 111), sur une face interne 110a de ladite doublure de pied 110 avant orientée vers l'intérieur du véhicule.

Selon une mise en oeuvre particulière, l'agencement comporte un élément externe 112 destiné à s'accoupler avec un élément de transmission d'effort du pied avant vers la porte avant (non représenté) du véhicule en cas de choc frontal au véhicule, ledit élément externe 112 étant fixé, notamment par soudure, sur une face externe 110b de ladite doublure de pied avant 110 orientée vers l'extérieur du véhicule. L'élément externe 112 est aussi appelé dans le domaine boîtier ou pion « anti-burst ». En fait, il est configuré pour s'accoupler avec une partie correspondante d'une porte avant du véhicule lors d'un choc frontal au véhicule. Sans cet élément externe, lorsque le choc frontal est suffisamment important, il applique un effort de compression de la structure du véhicule pouvant aller jusqu'à échappement de la porte articulée au niveau de la doublure de pied avant correspondante. En ce sens, l'accouplement permet d'éviter l'échappement de la porte en contrôlant sa déformation, ce qui conduirait à la perte d'une voie d'efforts et une restriction de la zone entrée de porte pouvant conduire à des déformations de la cellule de survie excessive et l'impossibilité d'ouvrir la porte après choc. La partie de porte destinée à s'accoupler avec l'élément externe est généralement le renfort de bandeau de porte disposé parallèlement à l'axe X au niveau de l'interface entre le bas de porte et une ouverture de la porte destinée à recevoir un vitrage.

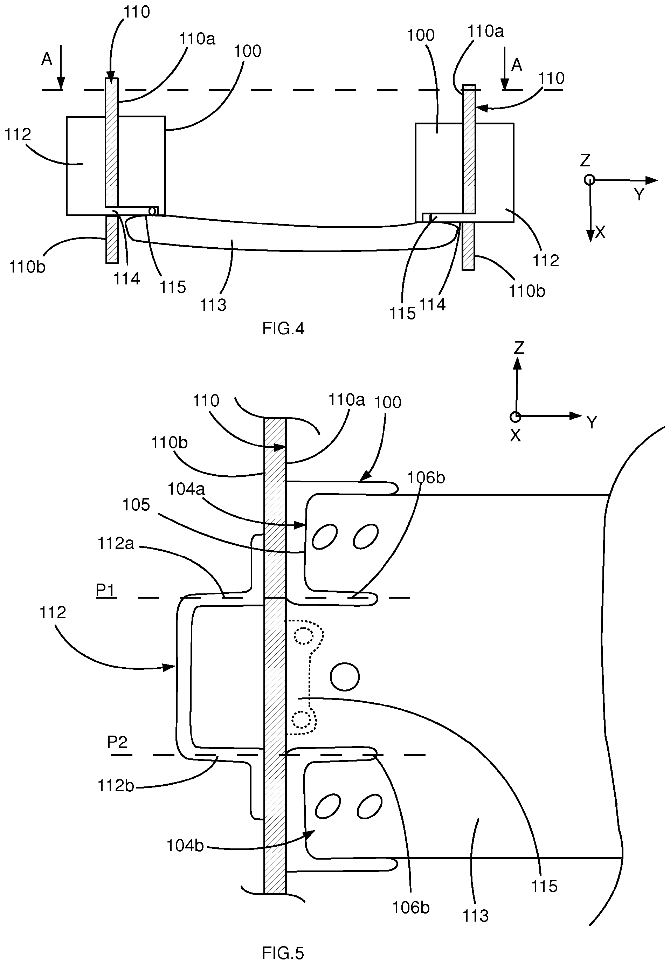

De préférence, l'élément externe 112 comporte deux cloisons 112a, 112b (figure 5) s'étendant de la face externe de la doublure de pied avant 110 et disposées de sorte à permettre une transmission d'un effort transversal au véhicule entre la traverse 113 de poste de conduite et ledit élément externe 112 en cas de choc frontal au véhicule. Pour réaliser cette fonction de transmission d'efforts, les deux cloisons 112a, 112b sont préférentiellement en alignement respectivement avec une des parois latérales dudit premier renfort 104a et une des parois latérales dudit deuxième renfort 104a. Avantageusement, et comme illustré à la figure 5, les deux cloisons 112a, 112b sont en alignement respectivement avec l'une des parois latérale 106b du premier renfort 104a et l'une des parois latérales 106b du deuxième renfort 104b adjacente/proximale à ladite une des parois latérale 106b du premier renfort 104a. Autrement dit, sur l'exemple particulier de la figure 5, l'une des cloisons 112a est incluse dans un plan P1 (perpendiculaire au plan de la figure 5) qui inclut aussi la paroi latérale 106b du premier renfort 104a, et l'autre cloison 112b est incluse dans un plan P2 (perpendiculaire au plan de la figure 5) qui inclut aussi la paroi latérale 106b du deuxième renfort 104b. L'utilisation des parois latérales 106b proximales des premier et deuxième renforts pour permettre un transfert d'effort selon l'axe Y entre la traverse 113 de poste de conduite et l'élément externe 112 en cas de choc frontal au véhicule, permet aussi de réduire la masse de l'élément externe 112 par rapport à l'art antérieur. En effet, selon l'art antérieur les cloisons 112a, 112b de l'élément externe devaient être disposées dans l'alignement des parois latérales du dispositif de fixation de la figure 1. Il en résulte que la présente invention peut permettre un gain de poids non négligeable évalué entre 0,1 kg et 0,2kg par rapport à l'art antérieur et ce pour des fonctions similaires.

Selon un perfectionnement, la doublure de pied avant 110 comporte une fente 114 (figure 4) permettant le passage d'une aile 115 de l'élément externe 112 fixée, notamment par soudure, sur la première face 102 du dispositif de fixation 100. Ceci permet d'améliorer la répartition des efforts en Y pour éviter l'arrachement de la porte avant accouplée à l'élément externe 112 en cas de choc frontal suffisamment important.

Dans le cadre de la description de l'agencement, seule une doublure de pied avant a été décrite en détails. Bien entendu, l'agencement peut comporter deux dispositifs de fixation 100 fixés chacun d'une part à une extrémité correspondante de la traverse 113 de poste de conduite et d'autre part à une doublure de pied avant 110 comme l'illustre la figure 4. En ce sens, tout ce qui a été dit ci-dessus en liaison avec un dispositif de fixation peut être étendu au niveau de chaque extrémité de la traverse de poste de conduite 113 du fait de la symétrie de la structure du véhicule selon l'axe médian du véhicule parallèle à l'axe X.

L'invention est aussi bien entendu relative à un véhicule automobile comprenant un agencement tel que décrit.

De préférence, le dispositif de fixation, est formé dans une pièce métallique.

## Revendications

1. Dispositif de fixation (100) d'une extrémité de traverse (113) de poste de conduite d'un véhicule automobile sur la caisse assemblée, ledit dispositif (100) comprenant un élément de fixation (101) muni d'une première face (102) destinée à recevoir la traverse (113) de poste de conduite et d'une deuxième face (103) opposée à la première face (102), **caractérisé en ce qu'**il comporte des premier et deuxième renforts (104a, 104b) s'étendant de la deuxième face (103) et comprenant chacun :
- une embase (105) reliée à l'élément de fixation (101) et destinée à être fixée à une partie du véhicule,
- deux parois latérales (106a, 106) s'étendant de l'embase (105) et reliées à l'élément de fixation (101).

2. Dispositif selon la revendication précédente, **caractérisé en ce que** l'embase (105) vient de matière avec l'élément de fixation (101) par pliage, et **en ce que** les deux parois latérales (106a, 106b) viennent de matière avec l'embase (105) par pliage.

3. Dispositif selon l'une des revendications précédentes, **caractérisé en ce que** les premier et deuxième renforts (104a, 104b) sont disposés au niveau d'extrémités longitudinales de l'élément de fixation (101).

4. Dispositif selon l'une des revendications précédentes, **caractérisé en ce qu'**au moins l'une des parois latérales (106b) de chacun des premier et deuxième renforts (104a, 104b) est fixée à l'élément de fixation (101) au niveau de la deuxième face (103), notamment par un cordon de soudure.

5. Dispositif selon l'une des revendications précédentes, **caractérisé en ce que** l'élément de fixation (101) comporte deux ailettes (107a, 107b) s'étendant de la deuxième face (103), et **en ce qu'**une des parois latérales (106a) de chacun des premier et deuxième renforts (104a, 104b) est fixée à l'une correspondante desdites ailettes (107a, 107b), notamment par un point de soudure.

6. Dispositif selon l'une quelconque des revendications précédentes, **caractérisé en ce qu'**il comporte un premier organe de fixation (108a) de la traverse (113) de poste de conduite à l'élément de fixation (101) formé au niveau du premier renfort (104a) et un deuxième organe de fixation (108b) de la traverse (113) de poste de conduite formé au niveau du deuxième renfort (104b).

7. Dispositif selon l'une quelconque des revendications précédentes, **caractérisé en ce que** la section de chacun des premier et deuxième renforts (104a, 104b) est définie, dans un plan perpendiculaire à la direction dans laquelle s'étendent lesdits premier et deuxième renforts (104a, 104b), par une ligne ouverte de forme générale en U.

8. Dispositif selon l'une quelconque des revendications précédentes, **caractérisé en ce qu'**il comporte un plan de symétrie perpendiculaire à l'élément de fixation (101) et passant entre les premier et deuxième renforts (104a, 104b).

9. Agencement pour véhicule automobile comportant un dispositif de fixation (100) selon l'une quelconque des revendications précédentes, dont les premier et deuxième renforts (104a, 104b) s'étendent de l'élément de fixation (101) vers l'avant du véhicule, une partie du véhicule (110) sur laquelle est monté le dispositif de fixation (100), et une traverse (113) de poste de conduite fixée sur le dispositif de fixation (100).

10. Agencement selon la revendication précédente, **caractérisé en ce que** la partie de véhicule (110) comporte une doublure de pied avant, droit ou gauche, et **en ce qu'**au moins l'un des premier et deuxième renforts (104a, 104b), notamment au niveau de son embase (105), est fixé, notamment par soudure, sur une face interne (110a) de ladite doublure de pied avant orientée vers l'intérieur du véhicule.

11. Agencement selon la revendication 10, **caractérisé en ce que** qu'il comporte un élément externe (112) destiné à s'accoupler avec un élément de transmission d'effort du pied avant vers une porte avant du véhicule en cas de choc frontal au véhicule, ledit élément externe (112) étant fixé, notamment par soudure, sur une face externe (110b) de ladite doublure de pied avant orientée vers l'extérieur du véhicule.

12. Agencement selon la revendication précédente, **caractérisé en ce que** l'élément externe (112) comporte deux cloisons (112a, 112b) s'étendant de la face externe de la doublure de pied avant et disposées de sorte à permettre une transmission d'un effort transversal au véhicule entre la traverse (113) de poste de conduite et ledit élément externe (112) en cas de choc frontal au véhicule.

13. Agencement selon la revendication précédente, **caractérisé en ce que** les deux cloisons (112a, 112b) sont en alignement respectivement avec une des parois latérales (106b) dudit premier renfort (104a) et une des parois latérales (106b) dudit deuxième renfort (104b).

14. Agencement selon l'une des revendications 10 à 13, **caractérisé en ce que** la doublure de pied avant (110) comporte une fente (114) permettant le passage d'une aile (115) de l'élément externe (112) fixée, notamment par soudure, sur la première face (102) du dispositif de fixation (100).

15. Véhicule automobile comprenant un agencement selon l'une des revendications 9 à 14.

## Patentansprüche

1. Vorrichtung zur Befestigung (100) eines Endes eines Querträgers (113) des Cockpits eines Kraftfahrzeugs an der zusammengebauten Karosserie, wobei die Vorrichtung (100) ein Befestigungselement (101) umfasst, das mit einer ersten Seite (102), die dazu bestimmt ist, den Querträger (113) des Cockpits aufzunehmen, und mit einer zweiten Seite (103), die der ersten Seite (102) gegenüberliegt, versehen ist, **dadurch gekennzeichnet, dass** sie eine erste und eine zweite Aussteifung (104a, 104b) aufweist, die sich von der zweiten Seite (103) aus erstrecken und jeweils umfassen:
- ein Unterteil (105), das mit dem Befestigungselement (101) verbunden ist und dazu bestimmt ist, an einem Teil des Fahrzeugs befestigt zu werden,
- zwei Seitenwände (106a, 106), die sich von dem Unterteil (105) aus erstrecken und mit dem Befestigungselement (101) verbunden sind.

2. Vorrichtung nach dem vorhergehenden Anspruch, **dadurch gekennzeichnet, dass** das Unterteil (105) durch Biegen mit dem Befestigungselement (101) einstückig ausgebildet ist, und dadurch, dass die zwei Seitenwände (106a, 106b) durch Biegen mit dem Unterteil (105) einstückig ausgebildet sind.

3. Vorrichtung nach einem der vorhergehenden Ansprüche, **dadurch gekennzeichnet, dass** die erste und die zweite Aussteifung (104a, 104b) an den Längsenden des Befestigungselements (101) angeordnet sind.

4. Vorrichtung nach einem der vorhergehenden Ansprüche, **dadurch gekennzeichnet, dass** wenigstens jeweils eine der Seitenwände (106b) der ersten und der zweiten Aussteifung (104a, 104b) an dem Befestigungselement (101) an der zweiten Seite (103) befestigt ist, insbesondere durch eine Schweißnaht.

5. Vorrichtung nach einem der vorhergehenden Ansprüche, **dadurch gekennzeichnet, dass** das Befestigungselement (101) zwei Flügel (107a, 107b) aufweist, die sich von der zweiten Seite (103) aus erstrecken, und dadurch, dass jeweils eine der Seitenwände (106a) der ersten und der zweiten Aussteifung (104a, 104b) an einem entsprechenden Flügel (107a, 107b) befestigt ist, insbesondere durch eine Punktschweißung.

6. Vorrichtung nach einem der vorhergehenden Ansprüche, **dadurch gekennzeichnet, dass** sie ein erstes Organ zur Befestigung (108a) des Querträgers (113) des Cockpits an dem Befestigungselement (101), das an der ersten Aussteifung (104a) ausgebildet ist, und ein zweites Organ zur Befestigung (108b) des Querträgers (113) des Cockpits, das an der zweiten Aussteifung (104b) ausgebildet ist, aufweist.

7. Vorrichtung nach einem der vorhergehenden Ansprüche, **dadurch gekennzeichnet, dass** der Querschnitt der ersten und der zweiten Aussteifung (104a, 104b) in einer Ebene, die senkrecht zu der Richtung verläuft, in welcher sich die erste und die zweite Aussteifung (104a, 104b) erstrecken, jeweils durch eine offene Linie definiert ist, die im Wesentlichen U-förmig ist.

8. Vorrichtung nach einem der vorhergehenden Ansprüche, **dadurch gekennzeichnet, dass** sie eine Symmetrieebene aufweist, die senkrecht zu dem Befestigungselement (101) ist und zwischen der ersten und der zweiten Aussteifung (104a, 104b) verläuft.

9. Anordnung für ein Kraftfahrzeug, welche eine Vorrichtung zur Befestigung (100) nach einem der vorhergehenden Ansprüche, deren erste und zweite Aussteifung (104a, 104b) sich von dem Befestigungselement (101) zur Vorderseite des Fahrzeugs hin erstrecken, einen Teil des Fahrzeugs (110), an welchem die Vorrichtung zur Befestigung (100) angebracht ist, und einen Querträger (113) des Cockpits, der an der Vorrichtung zur Befestigung (100) befestigt ist, umfasst.

10. Anordnung nach dem vorhergehenden Anspruch, **dadurch gekennzeichnet, dass** der Teil des Fahrzeugs (110) eine rechte oder linke A-Säulen-Verkleidung umfasst, und dadurch, dass die erste und/oder die zweite Aussteifung (104a, 104b), insbesondere an ihrem Unterteil (105), an einer Innenseite (110a) der A-Säulen-Verkleidung, die dem Inneren des Fahrzeugs zugewandt ist, befestigt ist, insbesondere durch Schweißen.

11. Anordnung nach Anspruch 10, **dadurch gekennzeichnet, dass** sie ein äußeres Element (112) aufweist, das dazu bestimmt ist, sich im Falle eines Frontalaufpralls des Fahrzeugs mit einem Element zur Kraftübertragung von der A-Säule auf eine Vordertür des Fahrzeugs zu verbinden, wobei das äußere Element (112) an einer Außenseite (110b) der A-Säulen-Verkleidung, die der Außenseite des Fahrzeugs zugewandt ist, befestigt ist, insbesondere durch Schweißen.

12. Anordnung nach dem vorhergehenden Anspruch, **dadurch gekennzeichnet, dass** das äußere Element (112) zwei Trennwände (112a, 112b) aufweist, die sich von der Außenseite der A-Säulen-Verkleidung aus erstrecken und derart angeordnet sind, dass sie im Falle eines Frontalaufpralls des Fahrzeugs eine Übertragung einer quer zu dem Fahrzeug wirkenden Kraft zwischen dem Querträger (113) des Cockpits und dem äußeren Element (112) ermöglichen.

13. Anordnung nach dem vorhergehenden Anspruch, **dadurch gekennzeichnet, dass** die zwei Trennwände (112a, 112b) mit einer der Seitenwände (106b) der ersten Aussteifung (104a) bzw. einer der Seitenwände (106b) der zweiten Aussteifung (104b) fluchten.

14. Anordnung nach einem der Ansprüche 10 bis 13, **dadurch gekennzeichnet, dass** die A-Säulen-Verkleidung (110) einen Schlitz (114) aufweist, der die Hindurchführung eines Flansches (115) des äußeren Elements (112) ermöglicht, der an der ersten Seite (102) der Vorrichtung zur Befestigung (100) befestigt ist, insbesondere durch Schweißen.

15. Kraftfahrzeug, welches eine Anordnung nach einem der Ansprüche 9 bis 14 umfasst.

## Claims

1. Device (100) for attaching an extremity of a driver's compartment cross member (113) of a motor vehicle to the assembled body, said device (100) including an attachment element (101) provided with a first face (102) designed to receive the driver's compartment cross member (113) and with a second face (103) opposite the first face (102), **characterized in that** it comprises first and second reinforcements (104a, 104b) extending from the second face (103) and each including:
- a base (105) that is connected to the attachment element (101) and that is designed to be attached to a portion of the vehicle,
- two side walls (106a, 106b) that extend from the base (105) and that are connected to the attachment element (101).

2. Device according to the preceding claim, **characterized in that** the base (105) is formed as a single piece with the attachment element (101) by bending, and **in that** the two side walls (106a, 106b) are formed as a single piece with the base (105) by bending.

3. Device according to one of the preceding claims, **characterized in that** the first and second reinforcements (104a, 104b) are arranged at the longitudinal extremities of the attachment element (101).

4. Device according to one of the preceding claims, **characterized in that** at least one of the side walls (106b) of each of the first and second reinforcements (104a, 104b) is attached to the second face (103) of the attachment element (101), in particular using a weld seam.

5. Device according to one of the preceding claims, **characterized in that** the attachment element (101) includes two fins (107a, 107b) extending from the second face (103), and **in that** one of the side walls (106a) of each of the first and second reinforcements (104a, 104b) is attached to the corresponding one of said fins (107a, 107b), in particular by means of a spot weld.

6. Device according to any one of the preceding claims, **characterized in that** it includes a first member (108a) for attaching the driver's compartment cross member (113) to the attachment element (101) formed at the first reinforcement (104a) and a second member (108b) for attaching the driver's compartment cross member (113) formed at the second reinforcement (104b).

7. Device according to any one of the preceding claims, **characterized in that** the section of each of the first and second reinforcements (104a, 104b) is defined, in a plane perpendicular to the direction in which said first and second reinforcements (104a, 104b) extend, by an open line having an overall "U" shape.

8. Device according to any one of the preceding claims, **characterized in that** it includes a plane of symmetry perpendicular to the attachment element (101) that passes between the first and second reinforcements (104a, 104b).

9. Arrangement for a motor vehicle including an attachment device (100) according to any one of the preceding claims, in which the first and second reinforcements (104a, 104b) extend from the attachment element (101) towards the front of the vehicle, a portion of the vehicle (110) on which the attachment device (100) is mounted, and a driver's compartment cross member (113) attached to the attachment device (100).

10. Arrangement according to the preceding claim, **characterized in that** the vehicle portion (110) is a right-side or left-side A-pillar inner panel, and **in that** at least one of the first and second reinforcements (104a, 104b), in particular at the base (105) thereof, is attached, notably by welding, to an internal face (110a) of said A-pillar inner panel oriented towards the inside of the vehicle.

11. Arrangement according to Claim 10, **characterized in that** it includes an external element (112) designed to engage with an element for transmitting force from the A-pillar to a front door of the vehicle if the vehicle suffers a frontal impact, said external element (112) being attached, in particular by welding, to an external face (110b) of said A-pillar inner panel oriented towards the outside of the vehicle.

12. Arrangement according to the preceding claim, **characterized in that** the external element (112) has two partitions (112a, 112b) extending from the external face of the A-pillar inner panel and that are arranged such as to enable transmission of a transverse force applied to the vehicle between the driver's compartment cross member (113) and said external element (112) if the vehicle suffers a frontal impact.

13. Arrangement according to the preceding claim, **characterized in that** the two partitions (112a, 112b) are aligned respectively with one of the side walls (106b) of said first reinforcement (104a) and one of the side walls (106b) of said second reinforcement (104b).

14. Arrangement according to one of Claims 10 to 13, **characterized in that** the A-pillar inner panel (110) includes a slot (114) enabling the passage of a wing (115) of the external element (112) attached, in particular by welding, to the first face (102) of the attachment device (100).

15. Motor vehicle including an arrangement according to one of Claims 9 to 14.
